(19) Europäisches Patentamt

European Patent Office

Office européen des brevets

(11) **EP 0 895 347 A2**

(12) **EUROPÄISCHE PATENTANMELDUNG**

(43) Veröffentlichungstag:
   **03.02.1999 Patentblatt 1999/05**

(51) Int. Cl.⁶: **H02P 21/00**, H02P 7/74

(21) Anmeldenummer: **98113521.3**

(22) Anmeldetag: **20.07.1998**

(84) Benannte Vertragsstaaten:
   **AT BE CH CY DE DK ES FI FR GB GR IE IT LI LU
   MC NL PT SE**
   Benannte Erstreckungsstaaten:
   **AL LT LV MK RO SI**

(30) Priorität: **28.07.1997 DE 19732460**

(71) Anmelder:
   **SIEMENS AKTIENGESELLSCHAFT
   80333 München (DE)**

(72) Erfinder:
   • **Holl, Eugen,Dipl.-Ing.(FH)
     90579 Langenzenn (DE)**
   • **Neumann, Günter,Dr.
     91336 Heroldsbach (DE)**

(54) **Verfahren und Vorrichtung zur Regelung eines Mehrmotorenantriebs mit mehreren Asynchronmotoren und einem Spannungszwischenkreis-Umrichter**

(57)    Die Erfindung bezieht sich auf ein Verfahren und eine Vorrichtung zur Regelung eines Mehrmotorenantriebs mit mehreren jeweils eine Drehzahl-Erfassungseinrichtung (6) aufweisenden Asynchronomotoren (2) und einem Spannungszwischenkreis-Umrichter (4). Erfindungsgemäß werden aus gemessenen Drehzahllstwerten ($n_{R1},...,n_{R4}$) in Abhängigkeit einer ermittelten Speisefrequenz($\omega_s$) ein maximaler Schlupffrequenz-Differenzwert ($\omega_{rdm}$) und ein Systemdrehzahl-Istwert ($n_{ist}$) ermittelt, wobei eine Korrekturfrequenz ($\Delta\omega_r$) der feldorientierten Regelung des Spannungszwischenkreis-Umrichters (4) mittels eines Begrenzungssignals ($S_{BRA}$) auf den maximalen Schlupffrequenz-Differenzwert ($\omega_{rdm}$) begrenzt wird, sobald dieser Differenzwert ($\omega_{rdm}$) einen Grenzwert ($\omega_{rgr}$) überschreitet. Somit orientiert sich die Speisefrequenz ($\omega_s$) des Umrichters (4) bei dynamischen Drehzahldifferenzen an den Drehzahlen der Antriebsräder, die einen guten Kontakt zur Straße haben, so daß diese ein Antriebsmoment ausüben und das Fahrzeug beschleunigen können.

FIG 1

EP 0 895 347 A2

EP 0 895 347 A2

**Beschreibung**

Die Erfindung bezieht sich auf ein Verfahren zur Regelung eines Mehrmotorenantriebs mit mehreren jeweils eine Drehzahl-Erfassungseinrichtung aufweisenden Asynchronmotor und einen Spannungszwischenkreis-Umrichter und eine Vorrichtung zur Durchführung dieses Regelungsverfahrens.

Bei Elektrofahrzeugen mit Mehrmotorenantrieben mit Asynchronmotoren, die an einem Spannungszwischenkreis-Umrichter betrieben werden, können sowohl stationäre als auch dynamische Drehzahlunterschiede der angetriebenen Räder auftreten. Stationäre Drehzahlunterschiede können z.B. durch Kurvenfahrt oder unterschiedliche Reifendurchmesser, bedingt durch den Reifendruck oder das Profil, auftreten. Diese Drehzahlunterschiede werden also durch das Fahrzeug und den Kontakt der Räder zur Straße aufgezwungen.

Dynamische Unterschiede sind zu erwarten, wenn der Reifenkontakt zur Straße verloren geht, wie z.B. bei Beschleunigungs- und Bremsvorgängen auf Glatteis, Rollsplitt oder auch bei kurzzeitigem Abheben der Räder.

Da die Motoren an einem Umrichter mit der gleichen Ständerfrequenz und -spannung betrieben werden, weisen die Motoren, bedingt durch die unterschiedlichen Drehzahlen, auch unterschiedliche Schlupffrequenzen auf. Dies bewirkt auch eine unterschiedliche Strom- und Drehmomentaufteilung auf die einzelnen Motoren. Bei großen Schlupffrequenzunterschieden, z.B. größer als der Nennschlupf, reduziert sich bei konstantem Summenstrom das Summendrehmoment der Antriebsmotoren. Diese Reduktion ist abhängig von der Wahl der Ständerfrequenz.

Bei extrem großen Schlupffrequenzunterschieden kann das Summendrehmoment der Antriebsmotoren bei konstantem Summenstrom bis auf Null zurückgehen. Da dies keinen effizienten Betrieb darstellt und hierbei wegen der unterschiedlichen Stromaufteilung auch eine stark unterschiedliche Erwärmung auftritt, ist das Antriebssystem vor solchen Betriebszuständen zu schützen. Bei ungünstiger Wahl der Ständerfrequenz können die einzelnen Antriebsmotoren auch vom Vorzeichen her unterschiedliche Drehmomente aufweisen, welches sich auf das Fahrverhalten entscheidend negativ auswirkt.

Aus der US-PS 5,432,418 ist ein Antriebssystem für ein Elektrofahrzeug bekannt, das vier Asynchronmotoren, die jeweils mit einem Rad des Elektrofahrzeugs gekoppelt sind, und einem Umrichter aufweist. Jeder Asynchronmotor weist eine Vorrichtung zur Erfassung seiner Rotorfrequenz auf. Diese ermittelten Rotorfrequenzen werden einer Auswerte-Elektronik zugeführt, die ausgangsseitig mit einer Regelungseinrichtung des Umrichters verbunden ist. Am Ausgang der Auswerte-Elektronik steht die maximale auftretende Rotorfrequenz an, die einem Addierer der Regelungseinrichtung zugeführt ist. In Abhängigkeit eines gemessenen Umrichter-Ausgangsstromes, auch als Speisestrom bezeichnet, und eines Soll-Speisestromes wird eine Abweichung ermittelt, aus der jeweils mittels einer Kennlinie eine variable Frequenzdifferenz und ein Amplitudenkoeffizient ermittelt wird. Diese variable Frequenzdifferenz wird ebenfalls dem eingangsseitigen Addierer der Regelungseinrichtung zugeführt, wobei an einem weiteren Eingang dieses Addierers ein Referenzsignal für die variable Frequenzdifferenz, auch als feste Frequenzdifferenz bezeichnet, ansteht. Am Ausgang dieses Addierers steht ein Summenfrequenzsignal an, das einerseits als erstes Steuersignal einem PWN-Steuersatz des Umrichters und andererseits einer Einrichtung zur Erzeugung einer normierten Spannungsamplitude zugeführt wird. Als Einrichtung ist eine Spannungs-Frequenz-Kennlinie vorgesehen. Diese normierte Spannungsamplitude wird mittels eines Multiplizerers mit dem erzeugten Amplitudenkoeffizienten multipliziert, an dessen Ausgang eine Speiseamplitude als zweites Steuersignal für den PWM-Steuersatz des Umrichters ansteht. Aus diesen beiden Steuersignalen (Speisefrequenz und Speiseamplitude) generiert der Umrichter eine Speisewechselspannung, wodurch sich ein Speisestrom einstellt, der sich auf die Asynchronmotoren aufteilt.

Außerdem weisen die Asynchronmotoren jeweils eine Einrichtung zur Messung der Motortemperatur auf, die ebenfalls ausgangsseitig mit der Auswerte-Elektronik verbunden sind. An einem zweiten Ausgang dieser Auswerte-Elektronik steht ein Temperatursignal an, das der Stromregeleinrichtung zugeführt ist. Der Soll-Speisestrom wird nun in Abhängigkeit eines Betriebszustandes (Fahren/Bremsen) ausgewählt. Außerdem wird in Abhängigkeit eines Betriebszustandssignals ein entsprechender Referenzwert (positiv/negativ) für die variable Frequenzdifferenz und eine variable Frequenzdifferenz (positiv/negativ) aktiviert.

Als Umrichter dieses Antriebssystems mit beispielsweise vier Asynchronmotoren ist ein Pulswechselrichter mit einer gleichspannungsseitigen Batterie vorgesehen, wobei der Pulswechselrichter steuerseitig mit einem Pulsweitenmodulator verbunden ist. Die Zustandssignale (Batteriespannung und Batteriestrom) der Batterie werden bei der Generierung einer Speisestrom-Abweichung und einer Speisespannungs-Amplitude verwendet.

Dieses Verfahren weist den Nachteil auf, daß bei starken Drehzahlunterschieden nur ein Motor mit Schlupffrequenz und die anderen Motoren mit deutlich überhöhter Schlupffrequenz betrieben werden. Dadurch teilt sich der Speisestrom und das Summendrehmoment auf die einzelnen Motoren unterschiedlich auf. Bei extrem großen Schlupffrequenzunterschieden kann das Summendrebmoment bis auf Null zurückgehen. Außerdem tritt wegen der unterschiedlichen Stromaufteilung auch eine stark unterschiedliche Erwärmung der Asynchronmotoren auf. Ferner stellt dieses bekannte Verfahren eine Spannungs-Frequenzkennliniensteuerung mit lastabhängiger Spannungsanpassung dar, welche dynamisch gegenüber feldorientierten Verfahren mit Zweikomponenten-Stromregelung deutliche Nachteile aufweist.

2

Aus der WO 95/03649 ist eine Zweikomponenten-Stromregelung mit einem Raumzeiger-Modulator für eine pulswechselrichtergespeiste Induktionsmaschine bekannt. Diese feldorientierte Regelung weist eine eingangsseitige Transformationseinrichtung, einen EMK-Rechner, ein Vorsteuernetzwerk, einen Stromregelkreis, eine EMK-Regelung und einen ausgangsseitigen Koordinatenwandler auf. Der eingangsseitigen Transformationseinrichtung werden zwei gemessene Phasenströme zugeführt, aus denen mit Hilfe eines Flußwinkels kartesische feldorientierte Ist-Stromkomponenten generiert werden. Diese Ist-Stromkomponenten werden einerseits dem Strom-Regelkreis und andererseits dem EMK-Rechner zugeführt. Diesem EMK-Rechner werden außerdem die Soll-Spannungskomponenten, die Parameter der Induktionsmaschine (Ständerwiderstand $R_s$, Streuinduktivität $L_\sigma$) und die Ständerfrequenz $\omega_s$ zugeführt. Ausgangsseitig ist dieser EMK-Rechner mit einem Istwert-Eingang der EMK-Regelung verknüpft, wobei am Sollwert-Eingang dieser Regelung eine Soll-d-Komponente eines EMK-Raumvektors ansteht. Das Ausgangssignal dieser EMK-Regelung wird als Schlupffrequenzkorrektur zur Bestimmung der Ständerfrequenz verwendet. Der Strom-Regelkreis weist für jede feldorientierte Stromkomponente einen Vergleicher mit nachgeschaltetem Regler auf, wobei an den invertierenden Eingängen jeweils ein Ausgangssignal der eingangsseitigen Transformationseinrichtung und den nichtinvertierenden Eingängen jeweils eine feldorientierte Soll-Stromkomponente anstehen. Die Ausgänge dieses Strom-Regelkreises sind mit den Ausgängen des Vorsteuernetzwerkes verbunden, wobei eingangsseitig diesem Vorsteuernetzwerk die Soll-Stromkomponenten, die Parameter "Ständerwiderstand", "Streuinduktivität" und "Hauptinduktivität" zugeführt sind. Das Summensignal, bestehend aus feldorientierten Vorsteuergrößen und Regler-Stellgrößen, auch als feldorientierte Stellgröße genannt, wird dem ausgangsseitigen Koordinatenwandler zugeführt, der diese kartesischen Komponenten in polare Komponenten wandelt. Diese polaren Stellgrößen-Komponenten, auch Spannungskomponenten genannt, und die Ständerfrequenz werden dem Raumzeiger-Modulator zugeführt, an dessen Ausgänge Ansteuersignale für den Pulswechselrichter anstehen.

Bei dieser feldorientierten Regelung mit Geber wird die EMK-Regelung zur Korrektur der Schlupffrequenz benutzt. Die Schlupffrequenz wird dabei berechnet aus der drehmomentbildenden Soll-Stromkomponente und einem Quotienten aus Rotorwiderstand und Sollfluß. Diese beiden Signale werden miteinander multipliziert, wobei das Produkt gleich der Schlupffrequenz ist. Da der Parameter "Rotorwiderstand" temperaturabhängig ist, ändert sich die Schlupffrequenz proportional zum Parameter "Rotorwiderstand". Mittels dieser EMK-Regelung kann die korrekte Feldorientierung und damit maximales Drehmoment erreicht werden. Dazu wird die EMK-Komponente in Flußrichtung (d-Komponente des EMK-Raumzeigers) zu Null geregelt.

Diese Regelungsstruktur hat sich auch bei einer geberlosen Induktionsmaschine bewährt. In der feldorientierten Regelung ohne Geber bildet der Integralanteil der EMK-Regelung die Drehzahl inklusiv der Schlupffrequenzkorrektur ab.

Der Erfindung liegt nun die Aufgabe zugrunde, ein Verfahren und eine Vorrichtung zur Regelung eines Mehrmotorenantriebs mit mehreren Asynchronmotoren, die über einen Spannungszwischenkreis-Umrichter gespeist werden, anzugeben, bei den die eingangs genannten Nachteile nicht mehr auftreten.

Diese Aufgabe wird erfindungsgemäß gelöst mit den Merkmalen des Anspruchs 1.

Das erfindungsgemäße Verfahren basiert auf dem eingangs genannten feldorientierten Verfahren mit Zweikomponentenstromregelung. Die Grundidee dieses erfindungsgemäßen Verfahrens besteht darin, daß der EMK-Regler der EMK-Regelung begrenzt wird, unabhängig davon, ob die Drehzahlen aller Asynchronmotoren bekannt sind oder nicht.

Bei Kenntnis der Drehzahlen aller Asynchronmotoren des Mehrmotorenantriebssystems wird ein maximaler Schlupffrequenz-Differenzbetrag ermittelt, der zur Begrenzung der Korrekturfrequenz verwendet wird. Sobald der maximale Schlupffrequenz-Differenzwert einen vorbestimmten Grenzwert überschreitet, wird die Korrekturfrequenz auf einen vorbestimmten Wert begrenzt. Als Drehzahl-Istwert für diese feldorientierte Regelung wird aus den mehreren gemessenen Drehzahl-Istwerten der Asynchronmotoren einer ausgewählt.

Vorteilhaft wird als Drehzahl-Istwert für die feldorientierte Regelung im Motorenbetrieb der minimale gemessene Drehzahl-Istwert und im Generatorbetrieb der maximale gemessene Drehzahl-Istwert der Asynchronmotoren des Mehrmotorenantriebssystems ausgewählt. Der Grenzwert für den maximalen Schlupffrequenz-Differenzwert wird vorteilhaft so gewählt, daß die positiven Eigenschaften der EMK-Regelung im stationären Betrieb, d.h. maximales Summendrehmoment bei vorgegebenem Summenstrom, nicht eingeschränkt wird.

Bei den angesprochenen dynamischen Drehzahldifferenzen stellt dieses erfindungsgemäße Verfahren sicher, daß die UmrichterAusgangsfrequenz sich an den Drehzahlen der Antriebsräder orientiert, die einen guten Kontakt zur Straße halten. Ein Weglaufen der Umrichter-Ausgangsfrequenz bei Beschleunigungsvorgängen, bedingt durch das Durchdrehen von mindestens einem Antriebsrad, wird somit verhindert, womit die Antriebsräder mit gutem Kontakt zur Straße auch bei diesen dynamischen Anforderungen ein Antriebsmoment ausüben und das Fahrzeug beschleunigen. Die Wirkungsweise des erfindungsgemäßen Verfahrens ist ähnlich einer Antischlupfregelung eines Fahrzeugs mit Verbrennungskraftmaschine.

Sind die Drehzahlen der Asynchronmotoren des Mehrmotorenantriebs nicht bekannt, so kann das zuvor beschriebene Verfahren auch nur unter Verwendung von elektrischen Größen durchgeführt werden. Hierbei wird eine Abweichung zwischen einer Soll- und Istgröße des Summenmaschinenmodells (Parallelschaltung der mehreren Asynchronmotoren) ausgenutzt. Als Soll- und Istgröße dieses Modells kann die Umrichter-Ausgangsspannung, der Fluß, die Leistung oder das Drehmoment verwendet werden. Vorteilhafterweise wird die Umrichter-Ausgangsspannung als Soll- und Istgröße zur Ermittlung einer Abweichung benutzt.

Sind die Drehzahlen der mehreren Asynchronmotoren annähernd gleich, so stimmen die Soll- und Istgrößen des Summenmaschinenmodells gut überein. Bei deutlichem Drehzahlunterschied wird der Istzustand des Summenmaschinenmodells verstimmt, welches sich in stationären Stromregelabweichungen zeigt. An der Differenz zwischen Soll- und Istwert der Umrichter-Ausgangsspannung oder der hieraus abgeleiteten Größen Fluß, Leistung oder Drehmoment kann der Drehzahlunterschied festgestellt werden.

In Abhängigkeit dieser festgestellten Abweichung wird ein Begrenzungssignal bestimmt, mit dem das Eingangssignal des EMK-Reglers der EMK-Regelung begrenzt wird. Durch diese Aufschaltung einer Begrenzungsfunktion kann das dynamische Weglaufen des EMK-Reglers bei dynamischen Drehzahlunterschieden begrenzt werden, welches wie eine Beschleunigungsbegrenzung wirkt.

Bei stationären Drehzahlunterschieden wirkt sich diese Begrenzungsfunktion nicht aus, da selbst bei engsten Kurvenradien der auftretende Drehzahlunterschied und somit die Modellverstimmung genügend klein ist.

Bei einem vorteilhaften Verfahren wird aus dem ermittelten Schlupffrequenz-Differenzbetrag und einem maximalen Schlupffrequenz-Istwert in Abhängigkeit einer Nennschlupffrequenz und eines Faktors ein Gewichtungsfaktor für die drehmomentbildende Soll-Stromkomponente der Zweikomponentenstromregelung bestimmt, mit dem die drehmomentbildende Soll-Stromkomponente reduziert wird. Da dieser Gewichtungsfaktor in Abhängigkeit des ermittelten Schlupffrequenz-Differenzbetrages bestimmt wird, ist diese Reduzierung der drehmomentbildenden Soll-Stromkomponente eine zusätzliche Maßnahme. Der Anfangswert dieser Reduktion sollte großer als die im stationären Betrieb sich einstellende größte Schlupffrequenzdifferenz gewählt werden. Somit wirkt diese Funktion nur bei dynamischen Drehzahlunterschieden und hat keinen Einfluß bei stationärem Betrieb, beispielsweise bei Kurvenfahrt. Durch die Reduzierung der drehmomentbildenden Soll-Stromkomponente werden die Motorverluste bei dynamischem Drehzahlunterschied reduziert.

Bei einem weiteren vorteilhaften Verfahren wird aus dem ermittelten Schlupffrequenz-Differenzbetrag und einem maximalen Schlupffrequenz-Istwert in Abhängigkeit einer Nennschlupffrequenz und eines Faktors ein Gewichtungsfaktor für die flußbildende Soll-Stromkomponente der Zweikomponenten-Stromregelung bestimmt, mit dem die flußbildende Soll-Stromkomponente reduziert wird. Da der Fluß-Sollwert aus der flußbildenden Soll-Stromkomponente abgeleitet wird, reduziert sich mit der Reduktion der flußbildenden Soll-Stromkomponente auch der Fluß. Diese zusätzliche Reduzierung der flußbildenden Soll-Stromkomponente zeigt dieselbe Wirkung, wie die Verwendung von "weichen" Asynchronmotoren beim Mehrmotorenantriebssystem, die größere Schlupffrequenzunterschiede tolerieren.

Diese Reduzierung der drehmomentbildenden Soll-Stromkomponente und der flußbildenden Soll-Stromkomponente können gleichzeitig oder aufeinander folgend eingesetzt werden. Als Maß für die gleichzeitige Verwendung beider Reduktionen kann der maximale Schlupffrequenz-Differenzbetrag dienen. D.h., bei sehr großen maximalen Schlupffrequenz-Differenzbeträgen können beide Reduktionen gleichzeitig eingesetzt werden, wobei bei weniger großen maximalen Schlupffrequenz-Differenzbeträgen nur die drehmomentbildende Drehmoment-Stromkomponente reduziert wird. In einem Übergangsbereich dieser beiden Grenzfälle kann die Reduktion der flußbildenden Soll-Stromkomponente zeitverzögert zur Reduktion der drehmomentbildenden Soll-Stromkomponente eingesetzt werden.

Zur weiteren Erläuterung der Erfindung wird auf die Zeichnung Bezug genommen, in der mehrere Ausführungsformen der Vorrichtung zur Durchführung des erfindungsgemäßen Verfahrens zur Regelung eines Mehrmotorenantriebs mit mehreren Asynchronmotoren, die aus einem Spannungszwischenkreis-Umrichter gespeist werden, schematisch veranschaulicht sind.

FIG 1    zeigt ein Blockschaltbild einer ersten Ausführungsform der Vorrichtung zur Durchführung des erfindungsgemäßen Verfahrens, in der

FIG 2    ist ein Blockschaltbild der feldorientierten Regelung mit nachgeschaltetem Modulator der Vorrichtung nach FIG 1 dargestellt, die

FIG 3    zeigt in einem Diagramm über dem maximalen Schlupffrequenz-Differenzbetrag den Verlauf eines Begrenzungssignals der EMK-Regelung und in der

FIG 4    ist ein Blockschaltbild einer zweiten Ausführungsform der Vorrichtung zur Durchführung des erfindungsgemäßen Verfahrens veranschaulicht, wobei die

FIG 5    einen Ausschnitt aus dem Blockschaltbild der feldorientierten Regelung der Vorrichtung nach FIG 4 zeigt.

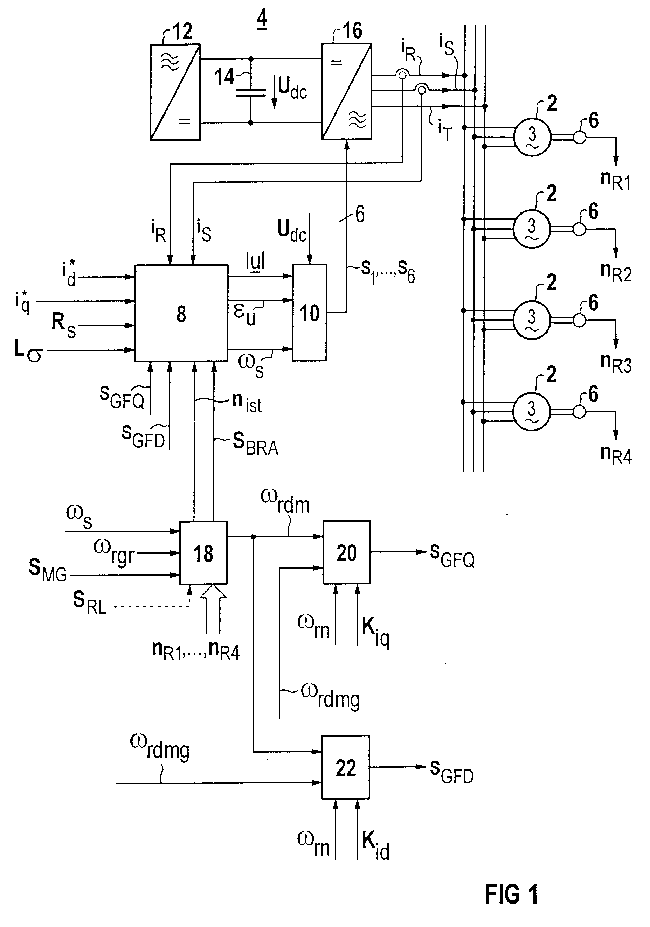

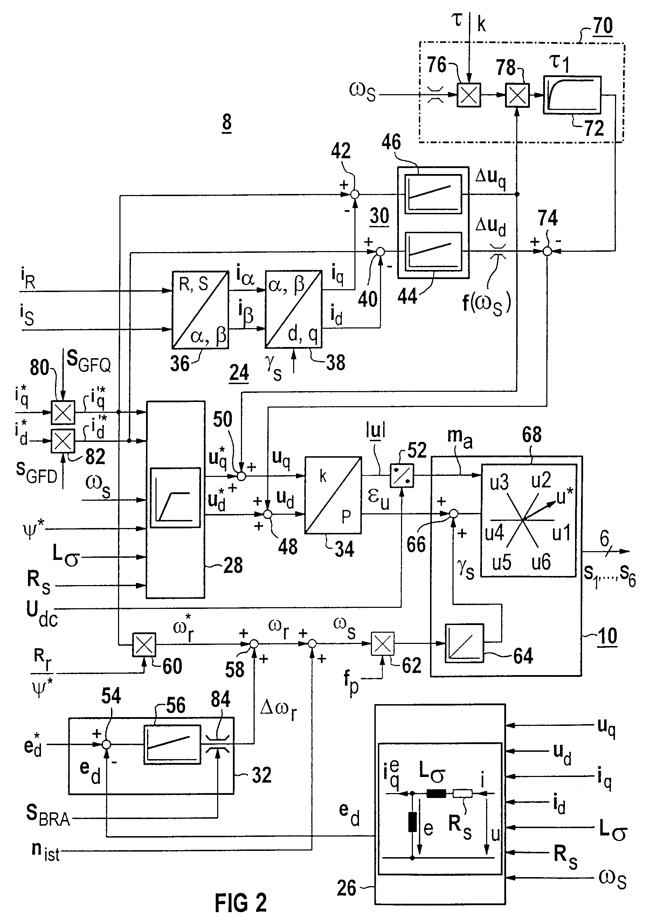

Die FIG 1 zeigt ein Blockschaltbild einer ersten Ausführungsform der Vorrichtung zur Durchführung des erfindungsgemäßen Verfahrens zur Regelung eines Mehrmotorenantriebs mit mehreren Asynchronmotoren 2 und einem Spannungszwischenkreis-Umrichter 4. Jeder Asynchronmotor 2 ist mit einer Drehzahl-Erfassungseinrichtung 6 versehen, an deren Ausgängen Drehzahlistwerte $n_{R1}$ ..., $n_{R4}$ der Asynchronmotoren 2 anstehen. Der Spannungszwischenkreis-Umrichter 4 weist eine feldorientierte Regelung 8, deren Blockschaltbild in der FIG 2 näher dargestellt ist, und einen Modulator 10, insbesondere einen Raumzeiger-Modulator, auf. Der Spannungszwischenkreis-Umrichter 4 besteht aus einem Gleichrichter 12, einem Spannungszwischenkreis 14 und einem Wechselrichter 16, insbesondere einem Pulswechselrichter. Wird dieser Mehrmotorenantrieb bei einem Elektrofahrzeug verwendet, so wird kein Gleichrichter 12 benötigt und als Spannungszwischenkreis 14 ist eine Batterie vorgesehen. Der Wechselrichter 16 dieses Spannungszwischenkreis-Umrichters 4 speist die mehreren Asynchronmotoren 2, die somit alle parallel geschaltet sind. Von den drei Umrichter-Ausgangsströmen $i_R$, $i_S$ und $i_T$ werden nur zwei gemessen und der feldorientierten Regelung 8 zugeführt. Außerdem werden dieser Regelung 8 Sollwerte $i^*_q$ und $i^*_d$ und Parameter $R_s$ und $L_\sigma$ zugeführt. Ausgangsseitig ist diese feldorientierte Regelung mit dem Modulator 10 verknüpft, der aus der Speisefrequenz $\omega_s$ und der Speisespannung $|\underline{u}|$, $\varepsilon_u$ der mehreren Asynchronmotoren 2 Ansteuersignale $S_1 \ldots S_6$ für den Wechselrichter 16 generiert, wobei der Wert der Zwischenkreisspannung $U_{dc}$ verarbeitet wird. Die Speisespannung $\underline{u}$ wird von der feldorientierten Regelung 8 als Spannungs-Raumzeiger mit polarem Komponentenbetrag $|\underline{u}|$ und Winkel $\varepsilon_u$ erzeugt.

Diesem Blockschaltbild ist weiter zu entnehmen, daß eine Einrichtung 18 zur Bestimmung eines Begrenzungssignals $S_{BRA}$ vorgesehen ist, der zwei Einrichtungen 20 und 22 zur Bestimmung eines Gewichtungsfaktors $S_{GFQ}$ und $S_{GFD}$ nachgeschaltet sind. Der Einrichtung 18 werden die Speisefrequenz $\omega_s$ der feldorientierten Regelung 8, ein vorbestimmter Grenzwert $\omega_{rgr}$ (Parameter), ein Betriebszustandssignal $S_{MG}$ und die gemessenen Drehzahl-Istwerte $n_{R1}$ ..., $n_{R4}$ der Asynchronmotoren 2 des Mehrmotorenantriebssystems zugeführt. Ausgangsseitig steht einerseits ein maximaler Schlupffrequenz-Differenzbetrag $\omega_{rdm}$ und andererseits ein Begrenzungssignal $S_{BRA}$ und ein vorbestimmter Drehzahl-Istwert $n_{ist}$ des Mehrmotorenantriebs an. Der berechnete maximale Schlupffrequenz-Differenzbetrag $\omega_{rdm}$ und ein vorbestimmter Schlupffrequenz-Differenzbetrags-Grenzwert $\omega_{rdmg}$ (Parameter) werden jeweils der Einrichtung 20 und 22 zugeführt. Das Begrenzungssignal $S_{BRA}$ und der vorbestimmte Drehzahl-Istwert $n_{ist}$, der auch als Systemdrehzahl-Istwert bezeichnet wird, werden der feldorientierten Regelung 8 zugeführt. Als Einrichtung 18 ist beispielsweise eine Recheneinheit vorgesehen. Damit die Einrichtung 20 bzw. 22 den Gewichtungsfaktor $S_{GFQ}$ bzw. $S_{GFD}$ bestimmen kann, ist dieser Einrichtung 20 bzw. 22 außerdem eine Nennschlupffrequenz $\omega_{rn}$ und ein Faktor $K_{iq}$ bzw. eine Nennschlupffrequenz $\omega_{rn}$ und ein Faktor $K_{id}$ zugeführt. Die Gewichtungsfaktoren $S_{GFQ}$ und $S_{GFD}$ werden ebenfalls der feldorientierten Regelung 8 zugeführt, mit denen die drehmoment- und flußbildende Soll-Stromkomponente $i^*_q$ und $i^*_d$ reduziert werden.

Als Einrichtung 20 bzw. 22 kann beispielsweise ebenfalls eine Recheneinheit vorgesehen sein. Eine bevorzugte Ausführungsform für diese Einrichtungen 18, 20 und 22 ist ein Mikroprozessor. Da für die Realisierung der feldorientierten Regelung 8 ebenfalls ein Mikroprozessor vorgesehen ist, können die Einrichtungen 18, 20 und 22 in Form von Unterprogrammen in der Software der feldorientierten Regelung integriert werden.

Die FIG 2 zeigt ein Blockschaltbild der feldorientierten Regelung 8 mit nachgeschaltetem Modulator 4. Diese feldorientierte Regelung 8 weist eine eingangsseitige Transformationseinrichtung 24, einen EMK-Rechner 26, ein Vorsteuernetzwerk 28, einen Stromregelkreis 30, eine EMK-Regelung 32 und einen ausgangsseitigen Koordinatenwandler 34 auf. Mittels der eingangsseitigen Transformationseinrichtung 24, die einen Koordinatenwandler 36 und einen Vektordreher 38 aufweist, und einem ermittelten Flußwinkel $\gamma_s$ werden die gemessenen Umrichter-Ausgangsströme $i_R$ und $i_S$ in eine fluß- und drehmomentbildende Ist-Stromkomponente $i_d$ und $i_q$ transformiert. Diese Ist-Stromkomponenten $i_d$ und $i_q$ werden jeweils einem Vergleicher 40 und 42 des Stromregelkreises 30 zugeführt, an deren nichtinvertierenden Eingängen jeweils eine Soll-Stromkomponente $i^*_d$ und $i^*_q$ anstehen. Ausgangsseitig ist der Vergleicher 40 bzw. 42 mit einem Stromregler 44 bzw. 46 verknüpft, der ausgangsseitig mit einem Addierer 48 bzw. 50 verbunden ist. Diese Stromregler 44 und 46 werden von dem Vorsteuernetzwerk 28 dadurch unterstützt, daß dieses Vorsteuernetzwerk 28 in Abhängigkeit von Soll-Stromkomponenten $i^*_d$ und $i^*_q$, von Parametern der Asynchronmaschinen 2 (Ständerwiderstand $R_s$, Streuinduktivität $L_\sigma$), einer ermittelten Speisefrequenz $\omega_s$ und einem Soll-Fluß $\Psi^*$ Vorsteuergrößen $u^*_d$ und $u^*_q$ berechnet, die jeweils dem Addierer 48 bzw. 50 zugeführt werden. Somit müssen die Stromregler 44 und 46 an ihren Ausgängen nur mehr die Spannung $\Delta u_d$ und $\Delta u_q$, auch als Reglerstellgrößen bezeichnet, liefern, die vom Vorsteuernetzwerk 28 nicht ermittelt werden, beispielsweise dynamische Anteile, Fehler, etc. ... . Die Ausgänge der beiden Addierer 48 und 50 werden dem ausgangsseitigen Koordinatenwandler 36 zugeführt. Mit diesem Koordinatenwandler 36 werden die kartesischen Komponenten $u_d$ und $u_q$ des Stellgrößen-Raumzeigers (Speisespannung für die mehreren Asynchronmotoren 2) in polare Komponenten $|\underline{u}|$ und $\varepsilon_u$ gewandelt. Die Betragskomponente $|\underline{u}|$ wird mittels eines Dividierers 52, an dessen zweiten Eingang die Zwischenkreisspannung $U_{dc}$ des Pulswechselrichters 16 ansteht, normiert. Die Ausgangsgröße $m_a$ ist der Aussteuerwert des Pulswechselrichters 16. Der Dividierer 52 kann auch Bestandteil des Raumzeiger-Modulators 10 sein, wie in der FIG 1 dargestellt. Die kartesischen Stellgrößen-Komponenten $u_d$ und $u_q$ und die Ist-Stromkomponenten $i_d$ und $i_q$ werden dem EMK-Rechner 26 zugeführt, dem ebenfalls die Maschinenparameter Ständerwiderstand $R_s$ und Streuinduktivität $L_\sigma$ und die ermittelte Speisefrequenz $\omega_s$ zugeführt sind. Am Ausgang dieses EMK-Rechners 26 steht eine d-Komponente $e_d$ eines EMK-Raumzeigers $\underline{e}$ an. Da bei einer korrekten Feldorientierung der EMK-Raumzeiger $\underline{e}$ nur eine Komponente $e_q$ in der q-Achse des mit der Speisefrequenz $\omega_s$ rotierenden d-, q-Koordinatensystem aufweist, muß die d-Komponente $e_d = 0$ sein. Diese d-Komponente $e_d$ wird der EMK-Regelung 32 zugeführt, an deren zweiten Eingang die Soll-d-Komponente $e^*_d$ ansteht, die Null ist. Diese EMK-Regelung 32 weist einen Vergleicher 54 und einen PI-Regler 56 auf.

In dieser feldorientierten Regelung 8 mit Drehzahl-Erfassungseinrichtungen 6 bildet der Imaginärteil des PI-Reglers 56 der EMK-Regelung 32 eine Korrekturfrequenz $\Delta\omega_r$ der Schlupffrequenz $\omega_r$ der Asynchronmotoren 2. Diese Korrekturfrequenz $\Delta\omega_r$ wird mittels eines Addierers 58 zu einem berechneten Schlupffrequenz-Sollwert $\omega^*_r$ addiert. Dieser berechnete Schlupffrequenz-Sollwert $\omega^*_r$ steht am Ausgang eines Multiplizierers 60 an, an dessen Eingängen eine drehmomentbildende Soll-Stromkomponente $i^*_q$ und ein Quotient aus Rotorwiderstand $R_r$ und Soll-Fluß $\Psi^*$ anstehen. Die Speisefrequenz $\omega_s$ ist die Summe dieses berechneten Schlupffrequenz-Sollwertes $\omega^*_r$ der Korrekturfrequenz $\Delta\omega_r$ und des von der Einrichtung 18 vorbestimmten Systemdrehzahl-Istwertes $n_{ist}$. Mittels eines Multiplizierers 62, an dessen zweiten Eingang eine Pulsfrequenz $f_p$ des Pulswechselrichters 16 ansteht, wird aus der Speisefrequenz $\omega_s$ Winkelinkremente erzeugt.

Diese Winkelinkremente werden ebenfalls dem Raumzeiger-Modulator 10 zugeführt. Dieser Raumzeiger-Modulator 10 weist einen Winkelintegrator 64, einen Addierer 66 und eine Recheneinheit 68 auf. Mittels des Winkelintegrators 64 und der Winkelinkremente wird der Flußwinkel $\gamma_s$ im ständerorientierten Koordinatensystem ermittelt, die zur Lage $\varepsilon_u$ des StellgrößenRaumzeiger $\underline{u}$ im flußorientierten Koordinatensystem addiert wird. Als Summe dieser beiden Winkel $\gamma_s$ und $\varepsilon_u$ erhält man die Lage $\alpha_u$ des Stellgrößen-Raumzeigers $\underline{u}$ im ständerorientierten Koordinatensystem. Aus den Signalen $m_a$ (Aussteuerwert) und $\alpha_u$ (Lage des Stellgrößen-Raumzeigers $\underline{u}$) werden mittels der Recheneinheit 68 die Ansteuersignale $S_1 \ldots S_6$ für den Pulswechselrichter 16 bestimmt.

Die bisher beschriebene feldorientierte Regelung 8 ist für eine Induktionsmaschine aus der WO 95/03649 bekannt. Das Regelverfahren, das mit dieser feldorientierten Regelung 8 durchgeführt wird, ist das Zweikomponenten-Stromregelverfahren. In dieser WO 95/03649 werden auf Veröffentlichungen verwiesen, die sich auf die Recheneinheit 68 und auf das Vorsteuernetzwerk 28, das auch als Entkopplungsnetzwerk bezeichnet wird, beziehen.

Diese Zweikomponenten-Stromregelung ist um einen Querzweig 70 erweitert, der die Regler-Stellgröße $\Delta u_q$ des Stromreglers 46 über ein Verzögerungsglied 72 auf die Regler-Stellgröße $\Delta u_d$ des Stromreglers 44 mittels eines Addierers 74 aufschaltet. Den Eingängen dieses Querzweiges 70 ist jeweils ein Multiplizierer 76 und 78 nachgeschaltet, wobei am zweiten Eingang des ersten Multiplizierers 76 Koeffizienten $\tau$ und k und am zweiten Eingang des zweiten Multiplizierers 78 die Frequenzgröße des ersten Multiplizierers 76 anstehen, und wobei der Ausgang des zweiten Multiplizierers 78 mit dem Verzögerungsglied 72 verbunden ist. Durch die Einfügung dieses Querzweiges 70 wird erreicht, daß der Ausgang des Stromreglers 46 nicht nur die Wirkspannung verändert (wie bei der Zweikomponenten-Stromregelung), sondern über die Änderung der Blindspannung auch eine Drehung des Spannungszeigers bewirkt (wie bei der Wirkstromregelung). Gleichzeitig läßt sich durch diesen Querzweig 70 erreichen, daß eine Änderung der Regler-Stellgröße $\Delta u_q$ den Blindstrom nicht beeinflußt, die Regelkreise also entkoppelt sind. Die für die Zweikomponenten-Regelung typischen langsamen Ausgleichsvorgänge bei verstimmtem Vorsteuernetzwerk 28 treten daher nicht mehr auf. Für eine ideale Entkopplung wird die Zeitkonstante $\tau$ des Verzögerungsgliedes 72 gleich der Kurzschlußzeitkonstante des Motors 2 gewählt und die Verstärkung k proportional zur Speisefrequenz $\omega_s$ veränderbar gemacht. Dieser Querzweig 70 ist aus der EP 0 633 653 A1 bekannt und dort ausführlich beschrieben, so daß an dieser Stelle nicht näher darauf eingegangen werden muß.

Diese feldorientierte Regelung 8 weist noch zwei weitere Multiplizierer 80 und 82 auf, die ausgangsseitig jeweils mit einem Eingang des Vorsteuernetzwerkes 28 verbunden sind. Eingangsseitig sind dem Multiplizierer 80 einerseits eine drehmomentbildende Soll-Stromkomponente $i^*_q$ und andererseits ein ermittelter Gewichtungsfaktor $S_{GFQ}$ zugeführt. Ausgangsseitig steht eine bearbeitete drehmomentbildende Soll-Stromkomponente $i'^*_q$ an. Dem Multiplizierer 82 sind eingangsseitig einerseits eine flußbildende Soll-Stromkomponente $i^*_d$ und andererseits der ermittelte Gewichtungsfaktor $S_{GFD}$ zugeführt. Ausgangsseitig steht nun eine bearbeitete flußbildenden Soll-Stromkomponente $i'^*_d$ am Vorsteuernetzwerk 28 an. Außerdem ist dem PI-Regler 56 der EMK-Regelung 32 ein Begrenzer 84 nachgeschaltet, an dessen Steuereingang das ermittelte Begrenzungssignal $S_{BRA}$ ansteht.

Anhand der Figuren 1 und 2 soll nun das erfindungsgemäße Verfahren näher erläutert werden:

Das erfindungsgemäße Verfahren besteht darin, daß beim Auftreten von dynamischen Drehzahlunterschieden der mehreren Asynchronmotoren 2 des Mehrmotorenantriebssystems die Korrekturfrequenz $\Delta\omega_r$ begrenzt wird, damit der Zustand großer Schlupffrequenzunterschiede vermieden wird. Um das Auftreten dynamischer Drehzahlunterschiede zu erkennen, werden zunächst aus den gemessenen Drehzahl-Istwerten $n_{R1}, \ldots, n_{R4}$ mit Hilfe der ermittelten Speisefrequenz $\omega_s$ und den Polpaarzahlen p der Asynchronmotoren 2 die einzelnen Schlupffrequenz-Istwerte $\omega_{r1}, \ldots, \omega_{r4}$ berechnet. Dazu ist in der Einrichtung 18 zur Bestimmung des Begrenzungssignals $S_{BRA}$ folgende Gleichung:

$$\omega_r = \omega_s - p \cdot n_{ist} \qquad (1)$$

hinterlegt. Nachdem die Schlupffrequenz-Istwerte $\omega_{r1}, \ldots, \omega_{r4}$ berechnet sind, wird aus diesen Werten $\omega_{r1}, \ldots, \omega_{r4}$ ein maximaler Schlupffrequenz-Differenzbetrag $\omega_{rdm}$ mit folgender Gleichung:

$$\omega_{rdm} = |\omega_{rmax} - \omega_{rmin}| \qquad (2)$$

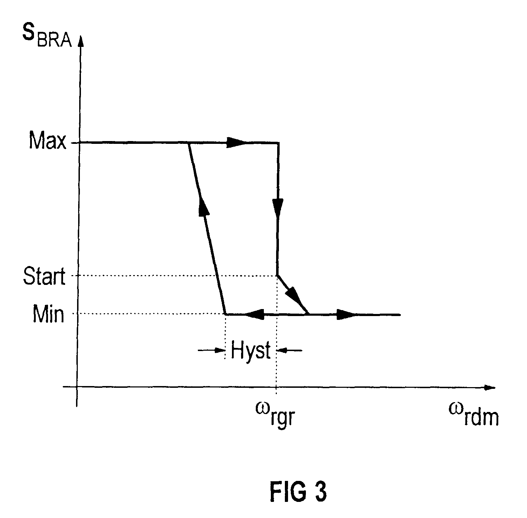

berechnet. Dieser maximale Schlupffrequenz-Differenzbetrag $\omega_{rdm}$ wird mit einem Grenzwert $\omega_{rgr}$ verglichen, der den maximal zulässigen Schlupffrequenzunterschied der mehreren Asynchronmotoren 2 festlegt. Wird dieser Grenzwert $\omega_{rgr}$ von dem ermittelten Schlupffrequenz-Differenzbetrag $\omega_{rdm}$ überschritten, so ändert sich am Ausgang einer Vergleichseinrichtung der Wert des Begrenzungssignals $S_{BRA}$. Als Vergleichseinrichtung kann eine Kennlinie verwendet werden, die im Diagramm der FIG 3 näher dargestellt ist. Diese Kennlinie gibt den Verlauf des Wertes des Begrenzungssignals $S_{BRA}$ und damit den Wert der Korrekturfrequenz $\Delta\omega_r$ in Abhängigkeit des berechneten Schlupffrequenz-Differenzbetrages $\omega_{rdm}$ an. Außerdem bestimmt diese Einrichtung 18 ebenfalls einen Systemdrehzahl-Istwert $n_{ist}$, die bei der Bestimmung der Speisefrequenz $\omega_s$ benötigt wird. Als Systemdrehzahl-Istwert $n_{ist}$ kann der kleinste gemessene Drehzahl-Istwert im Motorbetrieb für Rechtslauf, beispielsweise der gemessene Drehzahl-Istwert $n_{R1}$, ausgewählt werden. Im Generatorbetrieb für Rechtslauf wird für den Systemdrehzahl-Istwert $n_{ist}$ der größte gemessene Drehzahl-Istwert, beispielsweise der gemessene Drehzahl-Istwert $n_{R4}$, ausgewählt. Für die Festlegung dieses Systemdrehzahl-Istwertes $n_{ist}$ wird der Betriebszustand Motorbetrieb/Generatorbetrieb des Mehrmotorenantriebssystems benötigt, der durch das Betriebszustandssignal $S_{MG}$ angegeben wird. Ist neben einem Rechtslauf außerdem ein Linkslauf der Asynchronmotoren 2 möglich, so wird der Einrichtung 18 ebenfalls ein Richtungssignal $S_{RL}$ zugeführt, das in der FIG 1 mittels einer unterbrochenen Linie dargestellt ist. Dieser Rechts-/Linkslauf entspricht beispielsweise bei einem Elektrofahrzeug die Fahrtrichtung vorwärts/rückwärts.

Sobald der maximale Schlupffrequenz-Differenzbetrag $\omega_{rdm}$ den vorbestimmten Grenzwert $\omega_{rgr}$ überschreitet, wird die Korrekturfrequenz $\Delta\omega_r$ auf diesen Grenzwert $\omega_{rgr}$ begrenzt, wodurch bei konstantem Schlupffrequenz-Sollwert $\omega^*_r$ die Speisefrequenz $\omega_s$ ebenfalls auf einen Wert, bestehend aus der Summe der Korrekturfrequenz $\Delta\omega_r = \omega_{rgr}$ und des Schlupffrequenz-Sollwertes $\omega^*_r$, begrenzt ist. Dadurch wird nur ein dynamischer Drehzahlunterschied zugelassen, der dem vorbestimmten Grenzwert $\omega_{rgr}$ entspricht. Somit orientiert sich die Speisefrequenz $\omega_s$ an den Drehzahlen der Antriebsräder des Mehrmotorenantriebssystems, die einen guten Kontakt zur Straße haben, d.h. an dem Rad mit der kleinsten Drehzahl. Ein Weglaufen der Speisefrequenz $\omega_s$ und damit ein Weglaufen der Ständerfrequenzen der einzelnen Asynchronmotoren 2 bei Beschleunigungsvorgängen, bedingt z.B. durch das Durchdrehen von mindestens einem Antriebsrad, wird somit verhindert, womit die Antriebsräder mit gutem Kontakt zur Straße auch bei diesen dynamischen Vorgängen ein Antriebsmoment ausüben und das Elektrofahrzeug beschleunigen. Somit ähnelt die Wirkungsweise des erfindungsgemäßen Verfahrens der Wirkungsweise eines Antischlupfregelverfahrens. Beim Bremsvorgang wirkt sich das erfindungsgemäße Verfahren wie ein Antiblockierverfahren aus.

Zusätzlich zur Begrenzung der Korrekturfrequenz $\Delta\omega_r$ kann die drehmomentbildende Soll-Stromkomponente $i^*_q$, die flußbildende Soll-Stromkomponente $i^*_d$ oder beide Soll-Stromkomponenten $i^*_q$ und $i^*_d$ reduziert werden. Dazu wird mittels der Einrichtung 20 bzw. 22 ein Gewichtungsfaktor $S_{GRQ}$ bzw. $S_{GFD}$ berechnet. Für die Ermittlung des Gewichtungsfaktors $S_{GRQ}$ zur Reduzierung der drehmomentbildenden Soll-Stromkomponente $i^*_q$ wird neben dem von der Einrichtung 18 ermittelten Schlupffrequenz-Differenzbetrag $\omega_{rdm}$ außerdem eine Nennschlupffrequenz $\omega_{rn}$, einen vorbestimmten Schlupffrequenz-Differenzbetrags-Grenzwert $\omega_{rdmg}$ und ein Faktor $K_{iq}$ benötigt. Für die Berechnung des Gewichtungsfaktors $S_{GFD}$ zur Reduzierung der flußbildenden SollStromkomponente $i^*_d$ wird anstelle des Faktors $K_{iq}$ der Faktor $K_{id}$ verwendet. Ansonsten entsprechen die weiteren Signale denen der Einrichtung 20. In der Einrichtung 20 sind folgende Gleichungen:

$$S_{GFQ} = 1 - \frac{\omega_{rdm} - \omega_{rdmg}}{\omega_{rn} - \omega_{rdmg}} \cdot K_{iq} \qquad (3)$$

für $\qquad \omega_{rdm} - \omega_{rdmg} \geq 0$

und

$$S_{GFQ} = 1 \qquad (4)$$

für $\qquad \omega_{rdm} - \omega_{rdmg} < 0$

hinterlegt, wobei für den Faktor $K_{iq}$ ein Wert zwischen 0 und 1 gewählt werden kann. Außerdem ist der Quotient der Gleichung (3) auf den Wert 1 begrenzt. Die Reduzierung der drehmomentbildenden Soll-Stromkomponente $i^*_q$ greift erst dann, wenn der berechnete Schlupffrequenz-Differenzbetrag $\omega_{rdm}$ gleich oder größer einem vorbestimmten Grenzwert $\omega_{rdmg}$ ist. Das heißt, ab diesen vorbestimmten Schlupffrequenz-Differenzbetrags-Grenzwert $\omega_{rdmg}$ verringert sich der Wert des Gewichtungsfaktors $S_{GFQ}$ vom Wert Eins auf den Wert Null, wobei die Verringerung von der Abweichung des berechneten Schlupffrequenz-Differenzbetrages $\omega_{rdm}$ von seinem vorbestimmten Grenzqert $\omega_{rdmg}$ abhängig ist. Somit kann der Gewichtungsfaktor $S_{GFQ}$ einen Wert zwischen 0 und 1 annehmen.

In der Einrichtung 22 sind ebenfalls Gleichungen hinterlegt, die folgendermaßen lauten:

$$S_{GFD} = 1 - \frac{\omega_{rdm} - \omega_{rdmg}}{\omega_{rn} - \omega_{rdmg}} \cdot K_{id} \qquad (5)$$

$$\text{für} \qquad \omega_{rdm} - \omega_{rdmg} \leq 0$$

und

$$S_{GFD} = 1 \qquad (6)$$

$$\text{für} \qquad \omega_{rdm} - \omega_{rdmg} < 0.$$

Auch bei dieser Einrichtung 22 kann für den Faktor $K_{id}$ ein Wert zwischen 0 und 1 angenommen werden und der Quotient der Gleichung (5) ist ebenfalls auf den Wert 1 begrenzt.

Ab den vorbestimmten Schlupffrequenz-Differenzbetrags-Grenzwert $\omega_{rdmg}$ werden mit steigendem Schlupffrequenz-Differenzbetrag die drehmomentbildende Soll-Stromkomponente $i^*_q$ und die Soll-Stromkomponente $i^*_q$ und $i^*_d$ mittels dem Gewichtungsfaktor $S_{GFQ}$ oder den Gewichtungsfaktoren $S_{GFQ}$ und $S_{GFD}$ reduziert. Die bearbeiteten Soll-Stromkomponenten $i^*_q$ und $i^*_d$ werden anschließend im Vorsteuernetzwerk 28 verarbeitet. Der Anfangswert für die Reduzierung der drehmomentbildenden Soll-Stromkomponente $i^*_q$ und der flußbildenden Soll-Stromkomponente $i^*_d$ sollte größer als die im stationären Betrieb sich einstellende größte Schlupffrequenzdifferenz gewählt werden. Somit werden die drehmomentbildende Soll-Stromkomponente $i^*_q$ und die flußbildende Soll-Stromkomponente $i^*_d$ nur bei dynamischen Drehzahlunterschieden in Richtung Reduzierung bearbeitet und nicht im stationären Betrieb, beispielsweise bei Kurvenfahrt. Da der Soll-Fluß $\Psi^*$ in Abhängigkeit der flußbildenden Soll-Stromkomponente $i^*_d$ und einer Flußkennlinie vorgegeben wird, ändert sich auch dieser Soll-Fluß $\Psi^*$, sobald die flußbildende Stromkomponente $i^*_d$ in Abhängigkeit des Gewichtungsfaktors $S_{GFD}$ reduziert wird. Durch diese Feldschwächung wird die Maschine (mehrere Asynchronmotoren 2) "weicher", so daß größere Drehzahlunterschiede toleriert werden können. Diese Abhängigkeit des Soll-Flusses $\Psi^*$ ist im einzelnen nicht näher dargestellt.

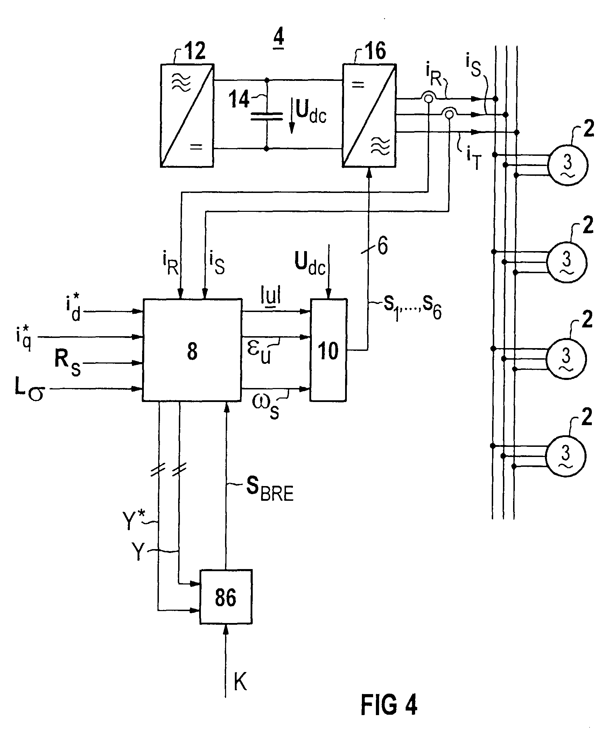

Die FIG 4 zeigt ein Blockschaltbild einer zweiten Ausführungsform der Vorrichtung zur Durchführung des erfindungsgemäßen Verfahrens. Gegenüber der Ausführungsform gemäß FIG 1 weisen die Asynchronmotoren 2 keine Drehzahl-Erfassungseinrichtungen 6 mehr auf. Anstelle der Einrichtungen 18, 20 und 22 ist bei dieser Ausführungsform eine Einrichtung 86 zur Bestimmung eines Begrenzungssignals $S_{BRE}$ vorgesehen, das der feldorientierten Regelung 8 zugeführt wird. Eingangsseitig werden der Einrichtung 86 von der feldorientierten Regelung Komponenten von Soll- und Istwerten $Y^*$ und $Y$ eines Summen-Maschinenmodells zugeführt. Außerdem ist dieser Einrichtung 86 ein Faktor K zugeführt. Als Soll- und Istwerte $Y^*$ und $Y$ dieses Summenmodells kann die Umrichter-Ausgangsspannung $\underline{u}$, auch als Speisespannung bezeichnet, oder auch daraus abgeleitete Größen Fluß, Leistung oder Drehmoment verwendet werden. Sobald der Istwert der Speisespannung $\underline{u}$ von dem Sollwert $\underline{u}^*$ abweicht, wobei die Komponenten des Ist- und Sollwertes dieser Speisespannung $\underline{u}$ in der feldorientierten Regelung 8 vorhanden sind, liegt eine Modellverstimmung $\Delta Y$ vor, die als Abweichung $\Delta Y$ ermittelt wird. Sobald eine Abweichung $\Delta Y$ des Istwertes vom Sollwert des Summenmaschinenmodells (Parallelschaltung mehrerer Asynchronmotoren 2) festgestellt wird, sind die Drehzahlen der mehreren Asynchronmotoren 2 nicht mehr annähernd gleich. D.h., es tritt ein deutlicher Drehzahlunterschied auf, welcher sich in einer stationären Stromregelabweichung zeigt. In Abhängigkeit dieser ermittelten Abweichung ΔY wird ein Begrenzungssignal $S_{BRE}$ bestimmt.

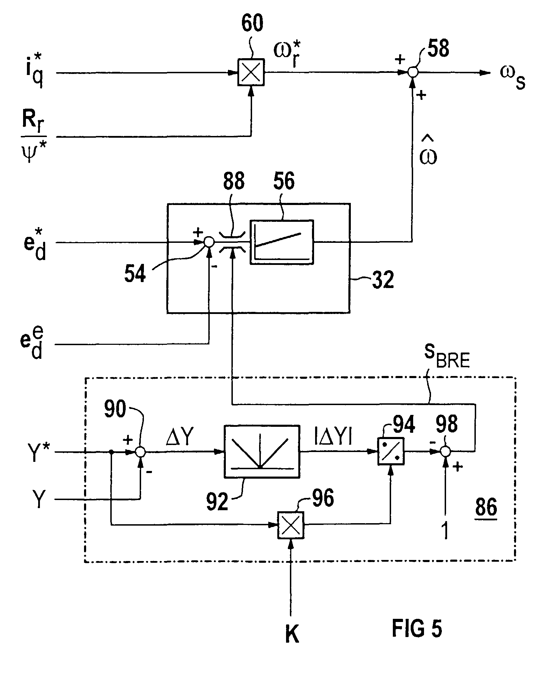

In der FIG 5 ist ein Ausschnitt aus der feldorientierten Regelung der zweiten Ausführungsform gemäß FIG 4 in Verbindung mit einer Ausführungsform der Einrichtung 86 zur Bestimmung eines Begrenzungssignals $S_{BRE}$ darstellt. Bei einer feldorientierten Regelung 8 mit einer EMK-Regelung 32 für einen geberlosen Asynchronmotor 2 bildet diese EMK-Regelung 32 einen Schätzwert $\hat{\omega}$ der Geschwindigkeit des Asynchronmotors 2. Da hier mehrere Asynchronmotoren 2 von einem Spannungszwischenkreis-Umrichter 4 gespeist werden, entspricht der Schätzwert $\hat{\omega}$ einem Systemdrehzahl-Istwert $n_{ist}$. Dieser Schätzwert $\hat{\omega}$ wird mittels des Addierers 58 zu einem berechneten Schlupffrequenz-Sollwert $\omega^*_r$ addiert. Dieser berechnete Schlupffrequenz-Sollwert $\omega^*_r$ steht am Ausgang des Multiplizierers 60 an. Die Speisefrequenz $\omega_s$ des Mehrmotorenantriebs ist die Summe dieses berechneten Schlupffrequenz-Sollwertes $\omega^*_r$ und des Schätzwertes $\hat{\omega}$.

Damit das erfindungsgemäße Verfahren durchgeführt werden kann, ist zwischen Vergleicher 54 und dem PI-Regler 56 der EMK-Regelung 32 ein Begrenzer 88 angeordnet. Der Steuereingang dieses Begrenzers 88 ist mit dem Ausgang der Einrichtung 86 verknüpft.

Die Einrichtung 86 weist einen Vergleicher 90, einen Betragsbilder 92, einen Dividierer 94, einen Multiplizierer 96 und einen weiteren Vergleicher 98 auf. Der Vergleicher 90 ist bei der Einrichtung 86 eingangsseitig angeordnet, der ausgangsseitig mit einem Eingang des Betragsbildners 92 verknüpft ist. Ausgangsseitig ist dieser Betragsbildner 92 mit einem ersten Eingang des Dividierers 94 verbunden, der ausgangsseitig mit einem invertierenden Eingang des weiteren Vergleichers 98 verknüpft ist. Am nichtinvertierenden Eingang des Vergleichers 90 steht ein Sollwert Y* des Summenmodells an, wogegen am invertierenden Eingang dieses Vergleichers 90 ein Istwert Y ansteht. Der Sollwert Y* wird ebenfalls einem Eingang des Multiplizierers 96 zugeführt, an dessen zweiten Eingang ein Faktor K ansteht. Ausgangsseitig ist dieser Multiplizierer 96 mit einem zweiten Eingang des Dividierers 94 verknüpft. Am nichtinvertierenden Eingang des weiteren Vergleichers 98 steht eine Konstante Eins an.

Diese Ausführungsform der Einrichtung 86 verwirklicht folgende Gleichung:

$$S_{BRE} = 1 - \frac{|\Delta Y|}{Y^* \cdot K} \qquad (7)$$

mit der das Begrenzungssignal $S_{BRE}$ berechnet wird. Der Wert des Faktors K kann zwischen >0 und 1 liegen. Der Wert des Quotienten dieser Gleichung (7) ist auf Eins begrenzt. Durch die Wahl dieser angegebenen Werte kann das Begrenzungssignal $S_{BRE}$ im stationären Betrieb keine Wirkung zeigen, da selbst bei engsten Kurven der auftretende Drehzahlunterschied und somit die Modellverstimmung ΔY genügend klein ist. Durch die Begrenzung des Eingangs des PI-Reglers 56 der EMK-Regelung 36 kann das dynamische "Weglaufen" des PI-Reglers 56 bei dynamischen Drehzahlunterschieden begrenzt werden, welches wie eine Beschleunigungsbegrenzung wirkt.

Bei einer vorteilhaften Ausführungsform der Einrichtung 86 ist ein Mikroprozessor vorgesehen, insbesondere wird diese Einrichtung 86 mittels eines Unterprogramms in der Software der feldorientierten Regelung 8 verwirklicht.

Mittels diesem Verfahren wird verhindert, daß sich die Drehzahlen der Asynchronmotoren 2 dieses Mehrmotorenantriebssystems wesentlich voneinander unterscheiden. Dadurch wird ebenfalls eine unterschiedliche Strom- und Drehmomentaufteilung auf die einzelnen Motoren 2 verhindert. D.h., es wird verhindert, daß im Motorbetrieb der Motor 2 mit der größten Drehzahl im Leerlaufpunkt betrieben wird und dadurch mit einem sehr hohen Strom belastet wird.

## Patentansprüche

1. Verfahren zur Regelung eines Mehrmotorenantriebs mit mehreren jeweils eine Drehzahl-Erfassungseinrichtung (6) aufweisenden Asynchronmotoren (2) und einem Spannungszwischenkreis-Umrichter (4), wobei mittels eines Zweikomponenten-Stromregelverfahrens in Abhängigkeit zweier gemessener Umrichter-Ausgangsströme ($i_R$, $i_S$), einer fluß- und drehmomentbildenden Soll-Stromkomponente ($i^*_d$, $i^*_q$) und Parametern ($R_s$, $L_\sigma$) ein Speisespannungs-Raumzeiger ($|\underline{u}|$, $\varepsilon_u$) für den Umrichter (4) ermittelt wird, wobei ein aus mehreren gemessenen Drehzahl-Istwerten ($n_{R1}$, ..., $n_{R4}$) vorbestimmter Systemdrehzahl-Istwert ($n_{ist}$) und ein berechneter Schlupffrequenz-Sollwert ($\omega^*_r$), dem eine Korrekturfrequenz ($\Delta\omega_r$) zur Behebung einer ermittelten Fehlorientierung des Stromregelverfahrens aufaddiert ist, zu einer Speisefrequenz ($\omega_s$) addiert werden, wobei aus den gemessenen Drehzahl-Istwerten ($n_{R1}$,...,$n_{R4}$) der Asynchronmotoren (2) und der Speisefrequenz ($\omega_s$) zugehörige Schlupffrequenz-Istwerte ($\omega_{r1}$,...,$\omega_{r4}$) berechnet werden, aus deren größtem und kleinstem Wert ein maximaler Schlupffrequenz-Differenzbetrag ($\omega_{rdm}$) ermittelt wird, wobei die Korrekturfrequenz ($\Delta\omega_r$) auf einen vorbestimmten Wert begrenzt wird, sobald der ermittelte maximale Schlupffrequenz-Differenzbetrag ($\omega_{rdm}$) einen vorbestimmten Grenzwert ($\omega_{rgr}$) überschreitet und wobei aus diesem Speisespannungs-Raumzeiger ($|\underline{u}|$, $\varepsilon_u$) und dieser Speisefrequenz ($\omega_s$) ein Ansteuersignal ($S_1$,...,$S_6$) des Spannungszwischenkreis-Umrichters (4) generiert werden.

2. Verfahren nach Anspruch 1, wobei die drehmomentbildende Soll-Stromkomponente ($i^*_q$) mit einem Gewichtungsfaktor ($S_{GFQ}$) multipliziert wird, der in Abhängigkeit des ermittelten Schlupffrequenz-Differenzbetrages ($\omega_{rdm}$), eines vorbestimmten Schlupffrequenz-Differenzbetrags-Grenzwertes ($\omega_{rdmg}$), einer Nennschlupffrequenz ($\omega_{rn}$) und eines Faktors ($K_{iq}$) bestimmt wird.

3. Verfahren nach Anspruch 1, wobei die flußbildende Soll-Stromkomponente ($i^*_d$) mit einem Gewichtungsfaktor ($S_{GFD}$) multipliziert wird, der in Abhängigkeit des ermittelten Schlupffrequenz-Differenzbetrages ($\omega_{rdm}$), eines vorbestimmten Schlupffrequenz-Differenzbetrags-Grenzwertes ($\omega_{rdmg}$), einer Nennschlupffrequenz ($\omega_{rn}$) und eines Faktors ($K_{id}$) bestimmt wird.

4. Verfahren nach Anspruch 2, wobei der Gewichtungsfaktor ($S_{GFQ}$) gemäß folgender Gleichungen:

$$S_{GFQ} = 1 - \frac{\omega_{rdm} - \omega_{rdmg}}{\omega_{rn} - \omega_{rdmg}} \cdot K_{iq}$$

für $\quad \omega_{rdm} - \omega_{rdmg} \geq 0$

und

$$S_{GFQ} = 1$$

für $\quad \omega_{rdm} - \omega_{rdmg} < 0$

mit $\quad K_{iq} = 0 \ldots 1$

berechnet wird.

5. Verfahren nach Anspruch 3, wobei der Gewichtungsfaktor ($S_{GFD}$) gemäß folgender Gleichungen:

$$S_{GFD} = 1 - \frac{\omega_{rdm} - \omega_{rdmg}}{\omega_{rn} - \omega_{rdmg}} \cdot K_{id}$$

für $\quad \omega_{rdm} - \omega_{rdmg} \leq 0$

und

$$S_{GFD} = 1$$

für $\quad \omega_{rdm} - \omega_{rdmg} < 0$

mit $\quad K_{id} = 0 \ldots 1$

berechnet wird.

6. Verfahren nach Anspruch 1, wobei aus den gemessenen Drehzahl-Istwerten ($n_{R1}$,...,$n_{R4}$) im Motorbetrieb für Rechtslauf der kleinste Drehzahl-Istwert ($n_{R1}$) und im Generatorbetrieb für Rechtslauf der größte Drehzahl-Istwert ($n_{R4}$) als Systemdrehzahl-Istwert ($n_{ist}$) ausgewählt wird.

7. Verfahren zur Regelung eines Mehrmotorenantriebs mit mehreren geberlosen Asynchronmotoren (2) und einem Spannungszwischenkreis-Umrichter (4), wobei mittels eines Zweikomponenten-Stromregelverfahrens in Abhängigkeit zweier gemessener Umrichter-Ausgangsströme ($i_R$, $i_S$), einer fluß- und drehmomentbildenden Soll-Stromkomponente ($i^*_d$, $i^*_q$) und Parametern ($R_s$, $L_\sigma$) ein Speisespannungs-Raumzeiger ($|\underline{u}|$, $\varepsilon_u$) für den Umrichter (4) ermittelt wird, wobei ein berechneter Schlupffrequenz-Sollwert ($\omega^*_r$) und ein in Abhängigkeit des Istwertes einer d-Komponente ($e_d$) eines berechneten EMK-Raumzeigers ($\underline{e}$) ermittelter Schätzwert ($\hat{\omega}$) der Geschwindigkeit der Asynchronmotoren (2) zu einer Speisefrequenz ($\omega_s$) addiert werden, wobei durch einen Vergleich eines Soll- und Istwertes (Y*, Y) eines Summen-Maschinenmodells eine Abweichung ($\Delta Y$) als Maß eines deutlichen Unterschiedes zwischen den Drehzahl-Istwerten der Asynchronmotoren (2) ermittelt wird, wobei in Abhängigkeit dieser ermittelten Abweichung ($\Delta Y$) ein Begrenzungssignal ($S_{BRE}$) zur Begrenzung des Schätzwertes ($\hat{\omega}$) bestimmt wird und wobei aus diesem Speisespannungs-Raumzeiger ($|\underline{u}|$, $\varepsilon_u$) und dieser Speisefrequenz ($\omega_s$) Ansteuersignale ($S_s$,...,$S_6$) des Spannungszwischenkreis-Umrichters (4) generiert werden.

8. Verfahren nach Anspruch 7, wobei das Begrenzungssignal ($S_{BRE}$) gemäß folgender Gleichung:

$$S_{BRE} = 1 - \frac{\left|\Delta Y\right|}{Y^* \cdot K}$$

mit

    Y* = eine Sollgröße des Summenmaschinenmodells
    K = Faktor

berechnet wird.

9. Vorrichtung zur Durchführung des Regelungsverfahrens nach Anspruch 1 für einen Mehrmotorenantrieb mit mehreren Asynchronmotoren (2) und einem Spannungszwischenkreis-Umrichter (4) mit einer feldorientierten Regelung (8) und einem Modulator (10) und einer Einrichtung (18) zur Bestimmung eines Begrenzungssignals ($S_{BRA}$), wobei die feldorientierte Regelung (8) einen EMK-Rechner (26) mit nachgeschaltetem EMK-Regelung (32) aufweist, die ausgangsseitig mittels eines Begrenzers (84) mit einem Eingang eines Addierers (58) verknüpft ist, dessen zweiter Eingang mit einer Einrichtung zur Berechnung eines Schlupffrequenz-Sollwertes ($\omega_r^*$) verknüpft ist, wobei die Drehzahl-Erfassungseinrichtungen (6) ausgangsseitig jeweils mit einem Eingang dieser Einrichtung (18) verknüpft sind, wobei ein Frequenz-Ausgang der feldorientierten Regelung (8) mit einem weiteren Eingang der Einrichtung (18) zur Bestimmung eines Begrenzungssignals ($S_{BRA}$) verbunden ist, wobei ein Ausgang dieser Einrichtung (18), an dem das Begrenzungssignal ($S_{BRA}$) ansteht, mit einem Steuereingang des Begrenzers (84) und ein Ausgang, an dem ein vorbestimmter Systemdrehzahl-Istwert ($n_{ist}$) ansteht, mit einem Eingang eines weiteren Addierers verbunden ist, dessen zweiter Eingang mit einem Ausgang des Addierers (58) verknüpft ist.

10. Vorrichtung nach Anspruch 9, wobei ein Ausgang der Einrichtung (18) zur Bestimmung eines Begrenzungssignals ($S_{BRA}$), an dem ein ermittelter maximaler Schlupffrequenz-Differenzbetrag ($\omega_{rdm}$) ansteht, mit einer Einrichtung (20) zur Bestimmung eines Gewichtungsfaktors ($S_{GFQ}$) verknüpft sind, an deren weiteren Eingängen eine Nennschlupffrequenz ($\omega_{rn}$), ein Schlupffrequenz-Differenzbetrags-Grenzwert ($\omega_{rdmg}$) und ein Faktor ($K_{iq}$) anstehen, und wobei der Ausgang der Einrichtung (20) zur Bestimmung eines Gewichtungsfaktors ($S_{GFQ}$) mit einem Multiplizierer (80) der feldorientierten Regelung (8) verbunden ist, an dessen zweiten Eingang eine drehmomentbildende Soll-Stromkomponente ($i^*_q$) ansteht.

11. Vorrichtung nach Anspruch 9, wobei ein Ausgang der Einrichtung (18) zur Bestimmung eines Begrenzungssignals ($S_{BRA}$), an dem ein maximaler Schlupffrequenz-Differenzbetrag ($\omega_{rdm}$) ansteht, mit einer Einrichtung (22) zur Bestimmung eines Gewichtungsfaktors ($S_{GFD}$) verknüpft sind, an deren weiteren Eingängen eine Nennschlupffrequenz ($\omega_{rn}$), ein Schlupffrequenz-Differenzbetrags-Grenzwert ($\omega_{rdmg}$) und ein Faktor ($K_{id}$) anstehen, und wobei der Ausgang der Einrichtung (22) zur Bestimmung eines Gewichtungsfaktors ($S_{GFD}$) mit einem weiteren Multiplizierer (82) der feldorientierten Regelung (8) verbunden ist, an dessen zweiten Eingang eine flußbildende Soll-Stromkomponente ($i^*_d$) ansteht.

12. Vorrichtung zur Durchführung des erfindungsgemäßen Verfahrens nach Anspruch 7 für einen Mehrmotorenantrieb mit mehreren geberlosen Asynchronmotoren (2) und einem Spannungszwischenkreis-Umrichter (4) mit einer feldorientierten Regelung (8) mit einer einen Begrenzer (88) aufweisenden EMK-Regelung (32) und einem Modulator (10), der eingangsseitig mit den Ausgängen der Regelung (8) und ausgangsseitig mit Steuereingängen eines Wechselrichters (16) des Spannungszwischenkreis-Umrichters (4) verknüpft ist, und einer Einrichtung (86) zur Bestimmung eines Begrenzungssignals ($S_{BRE}$), die ausgangsseitig mit einem Steuereingang des Begrenzers (88)

EP 0 895 347 A2

der EMK-Regelung (32) verbunden ist und eingangsseitig mit Ausgängen der feldorientierten Regelung (8) verbunden ist, an denen Soll- und Istwerte (Y*, Y) eines Summenmaschinenmodells anstehen.

13. Vorrichtung nach Anspruch 12, wobei die Einrichtung (86) zur Bestimmung eines Begrenzungssignals ($S_{BRE}$) einen Vergleicher (90), einen Betragsbildner (92), einen Dividierer (94), einen Multiplizierer (96) und einen weiteren Vergleicher (98) aufweist, wobei die Vergleicher (90, 98) bei der Einrichtung (86) jeweils ein- und ausgangsseitig angeordnet sind, wobei der eingangsseitige Vergleicher (90) ausgangsseitig mit einem Eingang des Betragsbildners (92), der ausgangsseitig mit einem ersten Eingang des Dividierers (94) verknüpft ist, wobei ein zweiter Eingang des Dividierers mit dem Ausgang des Multiplizierers (96) und ein Ausgang mit einem invertierenden Eingang des ausgangsseitigen Vergleichers (98) verknüpft ist, und wobei ein Eingang des Multiplizierers (96) mit einem nichtinvertierenden Eingang des eingangsseitigen Vergleichers (90) verbunden ist und am anderen Eingang des Multiplizierers (96) ein Faktor (K) ansteht.

14. Vorrichtung nach Anspruch 9, wobei als Einrichtung (18) zur Bestimmung eines Begrenzungssignals ($S_{BRA}$) eine Recheneinheit vorgesehen ist.

15. Vorrichtung nach Anspruch 10, wobei als Einrichtung (20) zur Bestimmung eines Gewichtungsfaktors ($S_{GFQ}$) eine Recheneinheit vorgesehen ist.

16. Vorrichtung nach Anspruch 11, wobei als Einrichtung (22) zur Bestimmung eines Gewichtungsfaktors ($S_{GFD}$) eine Recheneinheit vorgesehen ist.

17. Vorrichtung nach Anspruch 12, wobei als Einrichtung (86) zur Bestimmung eines Begrenzungssignals ($S_{BRE}$) eine Recheneinheit vorgesehen ist.

18. Vorrichtung nach einem der Ansprüche 9 bis 17, wobei als Vorrichtung wenigstens ein Mikroprozessor vorgesehen ist.

**FIG 1**

FIG 2

FIG 3

EP 0 895 347 A2

FIG 4

FIG 5